# EUROPÄISCHE PATENTSCHRIFT

(11) **EP 0 890 554 B1**
(45) Veröffentlichungstag und Bekanntmachung des Hinweises auf die Patenterteilung: **02.01.2002**
(21) Anmeldenummer: 98111277.4
(22) Anmeldetag: 18.06.1998
(51) Int. Cl.: C03B 33/095, C03B 33/06, A61J 1/06, B23K 26/00, C03B 33/10

(54) **Verfahren zur Herstellung einer Sollbruchstelle bei einem Glaskörper**
Method for making a breaking line on a glass body
Procédé de fabrication d'un endroit de casse à un corps en verre

(30) Priorität: 07.07.1997 DE 19728766
(43) Veröffentlichungstag der Anmeldung: 13.01.1999
(73) Patentinhaber: Schott-Rohrglas GmbH, 95448 Bayreuth (DE)
(72) Erfinder: Witzmann, Andre, Dr., 85674 Waldershof (DE); Trinks, Ulla, Dr., 95666 Mitterteich (DE)
(74) Vertreter: Ripper, Monika Sigrid

(56) Entgegenhaltungen:
- EP-A- 0 743 128
- DE-A- 3 537 434
- DE-A- 4 407 547
- DE-C- 4 214 159
- DE-C- 4 300 730

## Beschreibung

Die vorliegende Erfindung betrifft ein Verfahren nach dem Oberbegriff des Patentanspruchs 1.

Glasampullen haben für die Lagerung und den Transport medizinischer Präparate eine weite Verbreitung erlangt. Dies liegt zum einen daran, daß sie den Ampulleninhalt hermetisch gegenüber der Außenwelt abschließen. Zum anderen sind sie durch Zuschmelzen schnell und einfach verschließbar und können durch Abbrechen des sich an den Ampullenhals anschließenden Ampullenspießes auch relativ einfach wieder geöffnet werden. Ein weiterer Vorteil ist die einfache Sichtkontrolle des Ampulleninhalts durch die durchsichtige Glaswandung hindurch.

Das Öffnen von Ampullen (sog. Brechampullen) war bereits Gegenstand zahlreicher Patente und Patentanmeldungen. Die darin beschriebenen Verfahren sind jedoch alle mehr oder weniger mit Nachteilen behaftet. Der häufig scharfzackige Bruchrand an der nach dem Abbrechen noch weiter zu handhabenden Ampulle führt zu einer gewissen Verletzungsgefahr, die noch dadurch verstärkt wird, daß die in einem relativ weiten Bereich variierenden Bruchkräfte oft recht hohe Werte annehmen können, mit der Folge, daß unkontrollierte Bewegungen der momentan stark angespannten Hände nach dem Bruch der Ampulle auftreten können und es kommt zu Verletzungen am scharfzackigen Bruchrand. Schließlich kommt es auch vor, daß die Bruchlinie in den Rumpfbereich der Ampulle vordringt und diese unbrauchbar macht. Darüber hinaus können beim Brechen entstehende Splitter das in der Ampulle befindliche Präparat verunreinigen.

Bei konventionellen Verfahren, welche mechanisch einen mehr oder weniger definierten Anriß mit Feile, Cutscheibe, Diamant o. ä. als Sollbruchstelle auf der Oberfläche der Ampulle im Bereich des Ampullenhalses erzeugen, treten die vorstehend beschriebenen Probleme verstärkt auf. Als Ursachen hierfür sind z. B. Schwankungen der Bruchkraft durch Werkzeugverschleiß sowie durch Sensibilität der Verfahren gegenüber unvermeidbaren fertigungsbedingten Schwankungen in der Ampullengeometrie zu nennen.

Ein Versuch, den Bruch bei Ampullen kontrollierter ablaufen zu lassen, ist die Herstellung sogenannter Brechringampullen, bei denen die gewünschte Bruchlinie mit einer Emailfarbe markiert wird. Bei der thermischen Nachbehandlung der Ampulle entsteht aufgrund der unterschiedlichen Ausdehnungskoeffizienten des Ampullenglases und der Emailfarbe eine Netz von Mikrorissen an der Glasoberfläche im Bereich des markierten Ampullenhalses, das zur Bruchauslösung genutzt wird. Ein Nachteil dieses Verfahrens ist die nach wie vor bestehende Gefahr der Splitterbildung und der Verunreinigung des Präparats mit Schwermetallpartikeln aus der Farbe beim Brechen der Ampulle.

Neuere Verfahren benutzen Laserstrahlung als kontaktfreies und mit sehr reproduzierbaren Ergebnissen einsetzbares Werkzeug mit hoher Standzeit zur Anrißerzeugung.

Die DE-A1-35 37 434 beschreibt einen solchen Anrißvorgang für Brechampullen. Gepulste Laser (CO, Nd: YAG) erzeugen definierte Anrißlöcher in vorgegebenen Abständen auf der Oberfläche des Ampullenhalses. Nach der Druckschrift soll durch diese Maßnahme ein kontrollierter Bruch (d. h. definierte Bruchkräfte und gratfreie Bruchkanten) gewährleistet sein.

In DE-A1-43 00 730 wird zu dem gleichen Zweck die Verwendung eines TEA-CO₂-Hochleistungslaser beschrieben.

Ein Verfahren zur Erzeugung einer Bruchspannung als Sollbruchstelle mittels energiereicher elektromagnetischer Strahlung mit hoher Leistunsdichte (Er:YAG-Laser) wird in DE-C1-42 14 159 beschrieben.

Bei all den zuletzt beschriebenen Verfahren wird das Glas im Bereich des Laserspots durch Einzelimpulse oder Mehrfachimpulse lokal bis zu Schmelzflüssigkeit erhitzt. Bei der anschließenden sehr raschen Abkühlung der Schmelzzone werden so hohe Zugspannungen erzeugt, daß sie zur spontanen (oder forcierten: DE 43-C1-00 730) Bildung von Mikrorissen führen. Diese Mikrorisse stellen die Sollbruchstelle dar. Um die sichere Auslösung von Mikrorissen zu erzielen, muß das Zugspannungsfeld eine Mindestgröße überschreiten, was ein Mindestvolumen an erhitztem Glas bedingt. Dieses Glasvolumen hat gegenüber dem Ausgangsmaterial veränderte physikalische und chemische Eigenschaften, die auch bei nachfolgender Temperung nicht vollständig rückgängig gemacht werden können (Extrembeispiel ist das Auftreten sogenannter Reboil-Bläschen.). Dadurch bedingt kann es zu einer erhöhten Splittergefahr beim Bruch bzw. unkontrollierter Bruchausbreitung kommen.

Ein weiterer Nachteil der beschriebenen Laserverfahren ist darin begründet, daß die Anrisse, die auf der Oberfläche liegen bzw. bis an die Oberfläche heranreichen Umwelteinflüssen, z. B. Feuchtigkeit, beim weiteren Handling der Ampullen ausgesetzt sind. So kann unerwünschtes Rißwachstum, das zu einer Leckbildung oder zum vorzeitigen Bruch der Ampulle führt, eintreten, oder es erfolgt eine Rißausheilung, die dann zu schwerbrechenden Ampullen führt. Außerdem ist die Belastung der Glasoberfläche mit Glaspartikeln bzw. Verdampfungsprodukten undefiniert und von den Pharmazeuten unerwünscht.

Aus den o. g. Gründen haben sich die Laserverfahren zur Erzeugung von Sollbruchstellen in Ampullen noch nicht durchgesetzt.

Aufgabe der Erfindung ist, bei einer Brechampulle im Bereich der Brechzone eine Sollbruchstelle so auszubilden, daß sie ein reproduzierbares und sicheres Öffnen der Brechampulle ermöglicht. Insbesondere sollen Verletzungen, wie sie beim Öffnen von schwerbrechenden Ampullen auftreten können, vermieden werden und Beeinträchtigungen des Medikamentes durch das Öffnen der Ampulle ausgeschlossen werden.

Diese Aufgabe wird durch das im Patentanspruch 1 beschriebene Verfahren gelöst.

Gemäß der vorliegenden Erfindung wird die Sollbruchstelle dadurch erzeugt, daß gezielt Mikrorisse im Inneren der Glaswandung der Ampulle ausgebildet werden. Im Gegensatz zum eingangs diskutierten Stand der Technik, bei welchem jeweils die Glaswandung von ihrer Oberfläche her durch Mikrorisse geschwächt wird, bleiben die jeweiligen Oberflächen bei Anwendung des erfindungsgemäßen Verfahrens unversehrt.

Die Erzeugung von Mikrorissen im Inneren eines Glaskörpers ist bislang nur zu Zwecken des Einbringens von Markierungen in diese Körper bekannt. So beschreibt zum Beispiel die DE-A1-44 07 547 ein Verfahren zum Markieren des Inneren eines Körpers aus einem transparenten Material mittels eines Nd:YAG-Lasers (einen oder mehrere Pulse), wobei in räumlich begrenzten Bereichen ein Netz von punktförmigen Mikrorissen gebildet werden, die bis zu 0.01 mm klein sein können und für das Auge nicht mehr sichtbar sind. Bei Entspannungsbehandlung verschwinden die Restspannungen, die Mikrorisse sind jedoch permanent. In EP-A1-0 743 128 wird ein ähnliches Verfahren beschrieben, bei dem transparente Werkstoffe in ihrem Inneren mittels Laser, deren Wellenlänge nicht vom Werkstoff absorbiert werden, markiert werden können.

All diesen Markierungsverfahren ist gemeinsam, daß sie auf möglichst gute optische Erkennbarkeit der Markierungen bei gleichzeitiger Erhaltung der mechanischen Stabilität des Glaskörpers abzielen. In EP-A1-0743128 wird sogar als besonderer Vorteil des Verfahrens hervorgehoben, daß die Stabilität des Glases durch die eingebrachten Markierungen nicht beeinträchtigt wird.

Es hat sich nun in überraschender Weise gezeigt, daß durch Anwendung des erfindungsgemäßen Verfahrens nicht nur eine ausreichende Herabsetzung der Bruchstabilität einer Glaswandung möglich ist, sondern daß diese auch noch kontrolliert und reproduzierbar eingestellt werden kann.

Dadurch, daß sich die Mikrorisse im Inneren der Glaswandung befinden, sind die eingangs erwähnten Wechselwirkung mit der Umgebung, die zu einer Veränderung in der Rißausbildung führen können, ausgeschlossen.
Damit wird eine bislang unerreichte Stabilität der Brucheigenschaften der Ampulle bei Lagerung unter unterschiedlichsten Bedingungen erzielt.

Die Erzeugung der Mikrorisse unterhalb der Glasoberfläche ist weiterhin auch deshalb vorteilhaft, weil i. A. eine Vorspannung des Glases vorhanden ist, die an der Oberfläche eine Druckspannungszone und im Inneren des Glases eine üblicherweise schwache Zugspannungszone erzeugt. Die Zugspannungszone kann bei Anwendung des erfindungsgemäßen Verfahrens, wie weiter unten beschrieben wird, für eine definierte Rißausbildung genutzt werden, während bei den Anrißverfahren nach dem Stand der Technik, die von der Oberfläche wirken, die oberflächennahe Druckspannungszone durchdrungen oder kompensiert werden muß, um eine Ausheilung der Mikrorisse im Druckspannungsfeld zu verhindern.

Vorteilhafterweise werden erfindungsgemäß die Mikrorisse mittels konzentrierter Laserbestrahlung erzeugt; bei Ampullen, wie aus dem Stand der Technik bekannt, im Bereich des Ampullenhalses. Hier hat es sich als vorteilhaft erwiesen, den Laserstrahl mit einem Durchmesser von <100 µm auf die Mitte der Glaswandung zu fokussieren. Es liegt auf der Hand, daß hierzu Laserstrahlung mit einer Wellenlänge verwendet werden muß, bei der das Glas transparent oder wenigstens semitransparent ist. Der Fachmann kann durch geeignete Wahl der Laserparameter die Entstehung und das Wachstum der Mikrorisse, z. B. deren Länge und geometrische Anordnung gezielt steuern. Das Auffinden geeigneter Parameter bedarf hierbei keinerlei erfinderischen Tätigkeit, diese können durch den Fachmann beispielsweise mittels geeigneter Routineexperimente leicht ermittelt werden. Eine Anpassung der Verfahrensparameter an unterschiedliche Geometrien der Glaskörper (z. B. bei Ampullen) ist, wie aus dem obigen folgt, ebenfalls ohne weiteres möglich. Die Bildung der Mikrorisse kann mit einem einzelnen oder einer Serie von Laserimpulsen mit einer Repititionsfrequenz von ca. 10 bis 1000 Hz erfolgen.

Die Rißbildung kann zusätzlich durch eine gezielte lokale Vorspannnung des Glases weiterhin gesteuert werden. Es wurde gefunden, daß bei Ampullen eine Vorspannung, bei der im Bereich des Laserspots eine Zugspannung in Achsrichtung der Ampulle erzeugt wird, zur bevorzugten Bildung von Mikrorissen führt, die in Rohrumfangsrichtung ausgerichtet sind. Diese Rißgeometrie führt zu besonders guter Bruchqualität bei minimaler Splitterbildung. Die Zugspannung kann beispielsweise in an sich bekannter Weise mittels Brenner (DE-C2-36 15 287), Formwerkzeugen, zusätzlichen Laserstrahl oder Aufbringens mechanischer Biegemomente während der Laserbehandlung erzeugt werden.

Um die Stabilität einer Ampulle auch bei längerer Lagerung und Transport zu gewährleisten, sollte die Ausdehnung der Risse senkrecht zur Glasoberfläche ca. 0.5 x Wandstärke des Glases nicht überschreiten.

Zwei mögliche praktische Ausführungen des erfindungsgemäßen Verfahrens werden im folgenden am Beispiel der Ampulle beschrieben:
1) Die Sollbruchstelle kann beispielsweise an einer Stelle des Umfanges der Einschnürung der Ampulle mittels eines oder mehrerer in Umfangsrichtung entlang der gewünschten Trennlinie angeordneter Mikrorißzonen erzeugt werden. Dieses Verfahren (one-point-cut) bedingt eine Markierung der Sollbruchstelle für die Ausrichtung der Ampulle beim Bruch.
2) Des weiteren kann die Sollbruchstelle an der gewünschten Trennlinie entlang um den Ampullenhals umlaufend erzeugt werden (ähnlich wie bei einer sogenannten Brechringampulle). In diesem Fall kann die Ampulle ohne vorherige Ausrichtung gebrochen werden. Eine Markierung der Vorzugsrichtung für den Bruch ist nicht notwendig. Für einen definierten Bruchprozeß darf der Winkelabstand der Sollbruchstellen 30 Grad nicht übersteigen. Gegenüber den in DE-C1-42 14 159 und DE-A1-35 37 434 beschriebenen Laserverfahren ist die Bruchqualität bei Anwendung des erfindungsgemäßen Verfahrens deutlich dadurch verbessert, daß die Modulation der Bruchfront durch die Sollbruchstellen, die entlang der Bruchlinie aufgebracht sind, stark reduziert ist. So bewirken die Restspannungsfelder im Bereich der Laserspots der bei den DE-C1-42 14 159 und DE-A1-35 37 434 beschriebenen Verfahren i. a. nicht den gewünschten radialen Verlauf einer Rißfront durch das Zentrum eines Laserspots hindurch, sondern bewirken eine Rißablenkung in der Form, daß die Rißfront jeweils auf einem Halbkreissegment um das Zentrum der Spots herumläuft. Ein solcher Rißverlauf führt zu einer Erhöhung der Splitter- und Verletzungsgefahr.

Die Anbringung der erfindungsgemäßen Sollbruchstelle kann vorteilhaft in einem Prozeßabschnitt der Ampullenfertigung erfolgen, in dem die Ampullen bereits für einen Arbeitsschritt definiert gefaßt sind. Das kann z. B. die bisherige Station zum Anbringen der Sollbruchstelle, eine Station zur optischen Inspektion der Ampulle oder ein Futter im Ampullenkarussell sein. Insbesondere kann die erfindungsgemäße Sollbruchstelle nach der Kühlung der Ampullen angebracht werden. In diesem Fall sind keine Restspannungen von vorhergehenden Bearbeitungsschritten mehr vorhanden.

Als Laserstrahlungsquelle werden vorteilhafterweise gütegeschaltete oder modelocked Nd-Festkörper-Laser eingesetzt. Durch eine geeignete, kurzbrennweitige Optik wird der bei Bedarf im Strahlquerschnitt aufgeweitete Laserstrahl, auf einen Spotdurchmesser < 0.1 mm fokussiert. Bei stark gekrümmten Oberflächen kann eine zusätzliche Strahlformung durch z. B. Zylinder- oder eine diffraktive Optik notwendig sein (Stand der Technik). Durch die Verwendung nichtgaußförmiger Laserstrahlprofile ist eine zusätzliche Ausrichtung der Mikrorisse in Bruchrichtung realisierbar. Die Anbringung der Sollbruchstelle während des Transports der Ampulle wäre, aufgrund der geringen Laserimpulsdauer, falls nötig auch realisierbar, erfordert jedoch einen erhöhten Aufwand, um die Lage des Fokus in der Wandung auf besser als 0.1 mm konstant zu halten. Die Prozeßkontrolle kann z. B. durch optoelektronische Beobachtung der Plasmabildung und Nachregelung der Laserparameter erfolgen.

Das erfindungsgemäße Verfahren ist selbstverständlich nicht nur zur Anbringung von Sollbruchstellen bei Ampullen geeignet. Auch für viele andere Einsatzfälle z. B. beim Trennen von Glasrohr kann mit diesem Verfahren ein qualitativ hochwertiger, reproduzierbarer Anriß erzeugt werden.

Selbst für spezielle Trennprozesse im Flachglasbereich (z. B. das Heraussprengen von beliebig geformten Glasteilen (Uhrengläser) aus einer Glasscheibe kann das Verfahren vorteilhaft eingesetzt werden.

Ein Ausführungsbeispiel der Erfindung ist in der Zeichnung dargestellt und wird im folgenden näher beschrieben.

Es zeigt:

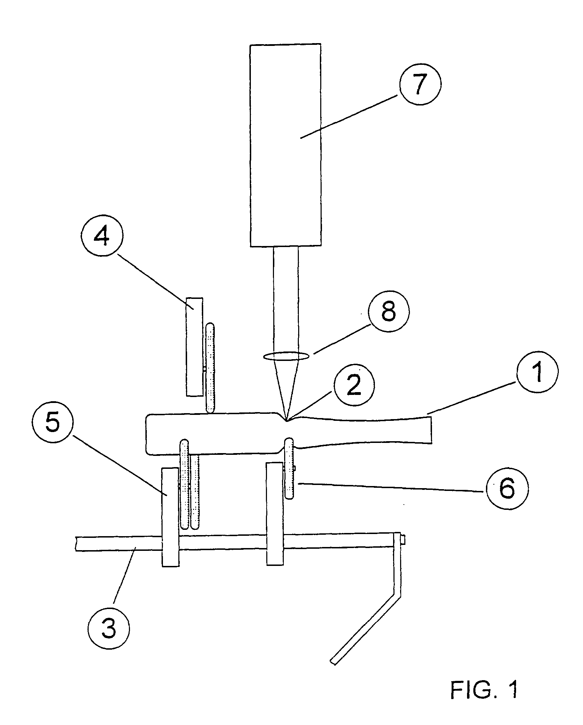

Fig. 1 den schematischen Aufbau einer Station zur Erzeugung einer Sollbruchstelle in einer Brechampulle gemäß der Erfindung.

In Fig. 1 wird bei einer 2 ml Ampulle 1 aus Borosilicatglas im Bereich des Ampullenhalses 2 (Einengung) eine Sollbruchstelle erzeugt.
Die Einengung wurde zuvor im Herstellungsprozeß der Ampulle auf einer Karussellmaschine mit Formwerkzeug auf einen Durchmesser von 6.5 mm und eine Wanddicke von 0.8 mm geformt. Die Anbringung der Sollbruchstelle erfolgt in der in Fig. 1 schematisch dargestellten Weiterverarbeitungslinie. Dort wird die Ampulle 1 mit einem Ausheber 3 aus der Transportkette gegen eine Anschlagrolle 4 ausgehoben. Die Lagerung der Ampulle erfolgt auf dem Rollenbett 5, 6 so, daß die Rolle 6 auf der Spur des Formwerkzeugs läuft.
Zur Erzeugung der Sollbruchstelle wird ein gütegeschalteter Nd:YAG-Laser 7 mit einer Impulsdauer von ca. 10 ns und einer Impulsenergie von 25 mJ verwendet. Der Laserstrahl wird mit einem Laserobjektiv 8 mit einer Brennweite von 50 mm auf die Mitte der Glaswandung fokussiert, er hat einen Durchmesser von etwa 0,1 mm. Um zu sichern, daß die Sollbruchstelle im Zentrum der Glaswandung erzeugt wird, darf der Durchmesser der Einengung 2 nur eine Toleranz von maximal 0,1 mm aufweisen. Mit einer Laserrepititionsfrequenz von 10 Hz werden am Ampullenhals 3 Sollbruchstellen im Abstand von 1 mm entlang der Umfangsrichtung aufgebracht. Die dazu notwendige Rotation der Ampullen wird durch den Antrieb der Rolle 4 erreicht.
Die drei Sollbruchstellen sind unter dem Mikroskop sichtbar und ermöglichen den sauberen, mechanischen Bruch der Ampulle 1.

## Patentansprüche

1. Verfahren zur Herstellung einer Sollbruchstelle zum Brechen der Glaswandung eines Glaskörpers, insbesondere einer Brechampulle oder eines Rohres, oder zum Heraustrennen von Teilen aus einer Glasscheibe durch Erzeugen von Mikrorissen in der Bruchzone,
**dadurch gekennzeichnet,**
**daß** die Mikrorisse im Inneren der Glaswandung bzw. der Glasscheibe erzeugt werden.

2. Verfahren nach Anspruch 1,
**dadurch gekennzeichnet,**
**daß** die Mikrorisse mittels Laserbestrahlung erzeugt werden.

3. Verfahren nach Anspruch 1 oder 2,
**dadurch gekennzeichnet,**
**daß** Laserstrahlung mit einer Wellenlänge verwendet wird, bei der das Glas transparent oder wenigstens semitransparent ist und die Dauer eines Laserimpulses < 1 ms, insbesondere < 100 ns ist.

4. Verfahren nach wenigstens einem der Ansprüche 1 bis 3,
**dadurch gekennzeichnet,**
**daß** durch Bestrahlung mit einer Serie von Laserimpulsen die Größe der Mikrorisse eingestellt wird.

5. Verfahren nach wenigstens einem der 4 Ansprüche 1 bis 3,
**dadurch gekennzeichnet,**
**daß** die Größe der Mikrorisse mittels einer thermische Nachbehandlung eingestellt wird.

6. Verfahren nach wenigstens einem der 4 Ansprüche 1 bis 5,
**dadurch gekennzeichnet,**
**daß** die Ausbildung der Mikrorisse durch eine gezielte Vorspannung des Glases gesteuert wird.

7. Verfahren nach wenigstens einem der Ansprüche 1 bis 6,
**dadurch gekennzeichnet,**
**daß** die Ausdehnung der Mikrorisse senkrecht zur Oberfläche 0.5 x Dicke der Glaswandung nicht überschreitet.

## Claims

1. Process for producing a desired breaking point for breaking the glass wall of a glass body, in particular a break-open ampoule or a tube, or for separating parts out of a pane of glass by generating microcracks in the breaking zone, **characterized in that** the microcracks are generated in the interior of the glass wall or of the pane of glass.

2. Process according to Claim 1, **characterized in that** the microcracks are generated by means of laser irradiation.

3. Process according to Claim 1 or 2, **characterized in that** laser radiation with a wavelength at which the glass is transparent or at least semitransparent is used and the generation of a laser pulse is < 1 ms, in particular < 100 ns.

4. Process according to at least one of Claims 1 to 3, **characterized in that** the size of the microcracks is set by irradiation with a series of laser pulses.

5. Process according to at least one of Claims 1 to 3, **characterized in that** the size of the microcracks is set by means of a subsequent heat treatment.

6. Process according to at least one of Claims 1 to 5, **characterized in that** the formation of the microcracks is controlled by means of a targeted prestressing of the glass.

7. Process according to at least one of Claims 1 to 6, **characterized in that** the extent of the microcracks perpendicular to the surface does not exceed 0.5 x the thickness of the glass wall.

## Revendications

1. Procédé pour créer une zone de rupture en vue de rompre une paroi de verre d'un corps en verre, en particulier d'une ampoule à rompre ou d'un tube, ou pour séparer des parties hors d'une vitre en formant des microfissures dans la zone de rupture, **caractérisé en ce que** les microfissures sont formées à l'intérieur de la paroi de verre, respectivement de la vitre.

2. Procéde selon la revendication 1, **caractérisé en ce que** les microfissures sont réalisées au moyen d'une exposition à un rayonnement laser.

3. Procéde selon la revendication 1 ou 2, **caractérisé en ce que** l'on utilise un rayonnement laser avec une longueur d'onde, pour laquelle le verre est transparent ou au moins semi-transparent et la durée d'une impulsion laser est < 1 ms, en particulier < 100 ns.

4. Procéde selon au moins une des revendications 1 à 3, **caractérisé en ce que** l'on règle la taille des microfissures par une exposition à une série d'impulsions laser.

5. Procéde selon au moins une des revendications 1 à 3, **caractérisé en ce que** l'on règle la taille des microfissures au moyen d'un traitement thermique ultérieur.

6. Procéde selon au moins une des revendications 1 à 5, **caractérisé en ce que** l'on commande la configuration des microfissures par une trempe adéquate du verre.

7. Procéde selon au moins une des revendications 1 à 6, **caractérisé en ce que** la dimension des microfissures perpendiculairement à la surface ne dépasse pas 0,5 x l'épaisseur de la paroi de verre.
